# EUROPEAN PATENT APPLICATION

(11) **EP 4 693 028 A1**
(43) Date of publication of application: **11.02.2026**
(21) Application number: 24857985.6
(22) Date of filing: 25.06.2024
(51) Int. Cl.: G06F 8/76

(54) **METHOD FOR MANAGING CROSS-OPERATING-SYSTEM APPLICATION, AND ELECTRONIC DEVICE**

(30) Priority: 29.08.2023 CN 202311101845; 31.08.2023 CN 202311130728
(71) Applicant: Huawei Technologies Co., Ltd., Shenzhen, Guangdong 518129 (CN)
(72) Inventor: ZHANG, Wei, Shenzhen, Guangdong 518129 (CN); WU, Fan, Shenzhen, Guangdong 518129 (CN)
(74) Representative: Pfenning, Meinig & Partner mbB
(86) International application number: PCT/CN2024/101188
(87) International publication number: WO 2025/044441

(57) **Abstract**

A method for managing a cross-operating system application and an electronic device are disclosed. The method is applied to the electronic device, the electronic device is equipped with a first operating system and a second operating system, the second operating system runs based on the first operating system, the first operating system is an Android operating system or a Harmony operating system, and the second operating system is different from the first operating system. The method includes: obtaining first information sent by the second operating system, where the first information indicates a status of a first application, the first application is an application on the second operating system, and the status of the first application includes an installed state and an uninstalled state; and changing a default application setting or an optional application setting on the first operating system based on the first information. According to the foregoing method, a status of a cross-operating system application can be detected in a timely manner, so that a default application setting and an optional application setting can be changed based on the status of the cross-operating system application, enhancing user experience.

## Description

This application claims priorities to Chinese Patent Application No. 202311101845.5, filed with the China National Intellectual Property Administration on August 29, 2023 and entitled "METHOD FOR MANAGING CROSS-OPERATING SYSTEM APPLICATION AND ELECTRONIC DEVICE", and to Chinese Patent Application No. 202311130728.1, filed with the China National Intellectual Property Administration on August 31, 2023 and entitled "METHOD FOR MANAGING CROSS-OPERATING SYSTEM APPLICATION AND ELECTRONIC DEVICE", both of which are incorporated herein by reference in their entireties.

### TECHNICAL FIELD

Embodiments of this application relate to the field of electronic devices, and more specifically, to a method for managing a cross-operating system application and an electronic device.

### BACKGROUND

Based on features of different operating systems, capabilities supported by a same application on different operating system platforms may be different. To meet a requirement of a user, an electronic device needs to run applications on different operating systems. Currently, the electronic device may run multiple applications on another operating system by using a proxy service. However, when managing the multiple applications, the electronic device cannot distinguish between the multiple applications, and when the multiple applications are uninstalled by the user, a native system side of the electronic device cannot detect that the multiple applications have been uninstalled. Consequently, user experience is degraded. Therefore, how to manage a cross-operating system application becomes an urgent problem to be resolved.

### SUMMARY

This application provides a method for managing a cross-operating system application and an electronic device, so that a status of a cross-operating system application can be detected in a timely manner, and when an application of a second operating system is run on a first operating system, experience of the application on the second operating system can be consistent with that of a native application on the first operating system in an application selection and default application setting scenario, enhancing user experience.

According to a first aspect, a method for managing a cross-operating system application is provided. The method is applied to an electronic device, the electronic device is equipped with a first operating system and a second operating system, the second operating system runs based on the first operating system, the first operating system is an Android operating system or a Harmony operating system, and the second operating system is different from the first operating system. The method includes: obtaining first information sent by the second operating system, where the first information indicates a status of a first application, the first application is an application on the second operating system, and the status of the first application includes an installed state and an uninstalled state; and changing a default application setting or an optional application setting on the first operating system based on the first information.

In this embodiment of this application, when the status of the first application on the second operating system changes, the first information may be sent to indicate the status of the first application. After obtaining the first information, the electronic device may change the corresponding default application setting or optional application setting. This ensures timeliness, avoids a problem that a file cannot be opened, and enhances user experience.

With reference to the first aspect, in some implementations of the first aspect, before the obtaining the first information, the first application is a default application or an optional application of a first file type, the first information indicates that the first application has been uninstalled, and the changing the default application setting or the optional application setting on the first operating system based on the first information includes: changing the default application setting or the optional application setting based on the first information, so that the first application is no longer the default application or the optional application of the first file type.

In this embodiment of this application, when the first application on the second operating system is uninstalled, the first information may be sent to indicate that the first application has been uninstalled. After obtaining the first information, the electronic device may change the corresponding default application setting or optional application setting. This ensures timeliness, avoids the problem that the file cannot be opened, and enhances user experience.

With reference to the first aspect, in some implementations of the first aspect, the first application corresponds to a first component in a proxy application APK, the proxy application acts as proxy for running an application on the second operating system, and the changing the default application setting or the optional application setting based on the first information includes: disabling the first component based on the first information.

With reference to the first aspect, in some implementations of the first aspect, the first component includes an activity activity of the Android operating system.

In this embodiment of this application, the electronic device may first pre-register a first component with an application selector, and the first component corresponds to the first application. After the first application running in a container is uninstalled, the second operating system may send information to notify that the first application has been uninstalled. After determining that the first application has been uninstalled, the electronic device may disable the first component. In this embodiment of this application, a path from the second operating system in the container to a first operating system side is established, so that the first operating system side can detect uninstallation of the application on the second operating system in a timely manner, and the application on the second operating system can be better managed, to enhance user experience. In addition, in this embodiment of this application, a correspondence between an application on the second operating system and a component is established. Because each component has a different name, the first operating system can distinguish between different applications on the second operating system.

With reference to the first aspect, in some implementations of the first aspect, the first application corresponds to a first proxy application, the first proxy application acts as proxy for running only the first application, and the changing the default application setting or the optional application setting based on the first information includes: uninstalling the first proxy application based on the first information.

In this embodiment of this application, after the first application running in the container is uninstalled, the second operating system may send information to notify that the first application has been uninstalled. The first application corresponds to the first proxy APK, and the first proxy APK acts as proxy for running only the first application. Therefore, the electronic device may uninstall the first proxy APK, so that the first application is no longer the default application of the first file type. In this embodiment of this application, a path from the second operating system in the container to a first operating system side is established, so that the first operating system side can detect uninstallation of the application on the second operating system in a timely manner, and the application on the second operating system can be better managed, to enhance user experience. In addition, each application on the second operating system may correspond to one proxy APK, so that when multiple applications on the second operating system are run, the first operating system may distinguish between applications on the second operating system by distinguishing between proxy APKs.

When multiple applications on the second operating system are installed on the first operating system, file types supported by different applications are separately registered, and life cycles of a registration entity and an application on the second operating system are synchronously managed, so that when the application on the second operating system is installed or uninstalled, a default application and an application selector of the system can be synchronously updated, enhancing user experience.

With reference to the first aspect, in some implementations of the first aspect, before the obtaining the first information, the first application is the default application of the first file type, and after the changing the default application setting based on the first information, the method further includes: setting a second application as the default application of the first file type.

In this embodiment of this application, the first application is the default application of the first file type. After the first application is uninstalled, the electronic device may determine that the second application is the default application of the first file type. When the electronic device detects an operation of opening a file of the first file type by a user, the electronic device may open the file by using the second application, to ensure that the file is successfully opened, and the user does not need to perform an additional setting.

With reference to the first aspect, in some implementations of the first aspect, before the obtaining the first information, the first application is the default application of the first file type, and after the changing the default application setting based on the first information, the method further includes: in response to an operation of opening a first file by a user, displaying a first application selection interface, where a file type of the first file is the first file type, the first application selection interface includes a first control and a second application icon, the second application icon is associated with a second application, and the first control corresponds to a default application setting function; in response to an operation of selecting the second application icon by the user, marking the second application icon; and in response to an operation of tapping the first control by the user, setting the second application as the default application of the first file type, and opening the first file by using the second application.

In this embodiment of this application, the first application is the default application of the first file type. After the first application is uninstalled, when detecting an operation of opening an application of the first file type by the user, the electronic device may display an application selection interface in response to the operation. The application selection interface may include an icon that can start the application of the first file type. The electronic device may re-determine a new default application of the first file type based on the operation of the user.

With reference to the first aspect, in some implementations of the first aspect, there is a correspondence between the first application and a first file type through a first component in a proxy application, before the obtaining the first information, the first component is in a disabled state, the first information indicates that the first application has been installed, and the changing the default application setting or the optional application setting on the first operating system based on the first information includes: enabling the first component based on the first information.

In this embodiment of this application, the proxy APK may first pre-register at least one component with the application selector, where the first component corresponds to the first application. After the application on the second operating system is installed on the second operating system running in the container, the second operating system may send information to notify that installation of the application on the second operating system is completed. After determining that the application on the second operating system is installed, the electronic device may enable the first component, so that the first application becomes the default application or the optional application of the first file type. In this embodiment of this application, the path from the second operating system in the container to the first operating system side is established, so that the first operating system side can detect installation of the application on the second operating system in a timely manner, and the application on the second operating system can be better managed, to enhance user experience. In addition, in this embodiment of this application, a correspondence between an application on the second operating system and a component is established. Because each component has a different name, the first operating system can distinguish between different applications on the second operating system.

With reference to the first aspect, in some implementations of the first aspect, the changing the default application setting or the optional application setting on the first operating system based on the first information includes: obtaining application information of the first application; converting the application information of the first application into first application information of the first operating system; determining a first proxy application based on the first application information of the first operating system, where the first proxy application acts as proxy for running only the first application; and registering the first application information of the first operating system with an application selector by using the first proxy application, to change the default application setting or the optional application setting.

In this embodiment of this application, after the first application is successfully installed, the application information of the first application may be converted into the first application information of the first operating system, and the converted first application information of the first operating system is associated with the first proxy APK, that is, the first application independently corresponds to the first proxy APK. The electronic device registers the application information with the application selector by using the proxy APK, so that the application on the second operating system becomes the default application or the optional application of the first file type. In this embodiment of this application, the path from the second operating system in the container to the first operating system side is established, so that the first operating system side can detect installation of the application on the second operating system in a timely manner, and the application on the second operating system can be better managed, to enhance user experience. In addition, each application on the second operating system may correspond to one proxy APK, so that when multiple applications on the second operating system are run, the first operating system may distinguish between applications on the second operating system by distinguishing between proxy APKs.

With reference to the first aspect, in some implementations of the first aspect, the first application information includes one or more of the following: a package name, an application version, icon information, an application description, and a permission.

With reference to the first aspect, in some implementations of the first aspect, the first operating system is the Android operating system or the Harmony operating system, and the second operating system is a Linux operating system or a Windows operating system.

With reference to the first aspect, in some implementations of the first aspect, before the obtaining the first information, the first application is the default application of the first file type, and the method further includes: updating a default application setting interface, so that the default application setting interface no longer includes an icon or information of the first application.

With reference to the first aspect, in some implementations of the first aspect, before the obtaining the first information, the first application is the optional application of the first file type, and the method further includes: updating the optional application setting; and in response to an operation of opening a first file by a user, displaying an application selection interface, where a file type of the first file is the first file type, and the application selection interface no longer includes an icon or information of the first application.

With reference to the first aspect, in some implementations of the first aspect, the method further includes: updating a default application setting interface, so that the default application setting interface includes information or an icon of the first application.

With reference to the first aspect, in some implementations of the first aspect, the method further includes: updating the optional application setting; and in response to an operation of opening a first file by a user, displaying an application selection interface, where a file type of the first file is the first file type, and an icon or information of the first application is added to the application selection interface.

With reference to the first aspect, in some implementations of the first aspect, the first operating system includes a multi-application management module, a multi-component management module, an application selector, and a package manager service PMS, the second operating system includes an application management module, and the obtaining the first information sent by the second operating system includes: obtaining, by the multi-application management module, the first information from the application management module; and the changing the default application setting or the optional application setting on the first operating system based on the first information includes: determining, by the multi-application management module based on the first information, that the first application has been uninstalled; communicating, by the application management module, with the multi-component management module, so that the multi-component management module determines that the first component is in the disabled state; receiving, by the package manager service through a customization interface, second information sent by the multi-component management module, where the second information indicates that the first component is in the disabled state; and disabling, by the package manager service, the first component based on the second information, so that the application selector updates the default application setting or the optional application setting.

It should be noted that the multi-application management module, the multi-component management module, the application selector, the package manager service, and the application management module are merely logical function division, and may be other division during actual implementation, and the foregoing modules may alternatively be named in another manner.

With reference to the first aspect, in some implementations of the first aspect, the first operating system includes a multi-application management module, an application selector, and a package manager service PMS, the second operating system includes an application management module, and the obtaining the first information sent by the second operating system includes: obtaining, by the multi-application management module, the first information from the application management module; and the changing the default application setting or the optional application setting on the first operating system based on the first information includes: receiving, by the package manager service through a customization interface, second information sent by the multi-component management module, where the second information indicates to uninstall the first proxy application; and uninstalling, by the package manager service, the first proxy application based on the second information, so that the application selector updates the default application setting or the optional application setting.

It should be noted that the multi-application management module, the application selector, the package manager service, and the application management module are merely logical function division, and may be other division during actual implementation, and the foregoing modules may alternatively be named in another manner.

With reference to the first aspect, in some implementations of the first aspect, the first operating system includes a multi-application management module, a multi-component management module, an application selector, and a package manager service PMS, the second operating system includes an application management module, and the obtaining the first information sent by the second operating system includes: obtaining, by the multi-application management module, the first information from the application management module; and the changing the default application setting or the optional application setting on the first operating system based on the first information includes: communicating, by the application management module, with the multi-component management module, so that the multi-component management module determines that the first component is in the enabled state; receiving, by the package manager service through a customization interface, second information sent by the multi-component management module, where the second information indicates that the first component is in the enabled state; and enabling, by the package manager service, the first component based on the second information, so that the application selector updates the default application setting or the optional application setting.

With reference to the first aspect, in some implementations of the first aspect, the first operating system includes a multi-application management module, an application selector, and a package manager service PMS, the second operating system includes an application management module, and the obtaining the first information sent by the second operating system includes: obtaining, by the multi-application management module, the first information from the application management module; and the changing the default application setting or the optional application setting on the first operating system based on the first information includes: obtaining, by the multi-application management module, the application information of the first application; converting, by the multi-application management module, the application information of the first application into application information of the first proxy application; and registering, by the first proxy application, the application information of the first proxy application with the application selector, so that the application selector updates the default information setting or the optional application setting.

According to a second aspect, an electronic device is provided, and includes one or more processors and one or more memories. The one or more memories store one or more computer programs. The one or more computer programs include instructions. When the instructions are executed by the one or more processors, the electronic device is enabled to perform any one of the first aspect or the possible implementations of the first aspect.

According to a third aspect, a computer-readable storage medium is provided. The computer-readable storage medium includes a computer program or instructions, and when the computer program or the instructions are run on a computer, the method in any one of the first aspect or the possible implementations of the first aspect is performed.

According to a fourth aspect, a computer program product is provided. The computer program product includes a computer program or instructions, and when the computer program or the instructions are run on a computer, the method in any one of the first aspect or the possible implementations of the first aspect is performed.

According to a fifth aspect, a computer program is provided. When the computer program is run on a computer, the method in any one of the first aspect or the possible implementations of the first aspect is performed.

According to a sixth aspect, an electronic device is provided. The electronic device includes modules/units for performing the method in any one of the foregoing aspect or the possible designs of the foregoing aspect. The modules/units may be implemented by hardware, or may be implemented by hardware executing corresponding software.

According to a seventh aspect, a computer program product is provided. When the computer program product runs on an electronic device, the electronic device performs the method in any one of the first aspect or the possible implementations of the first aspect.

For beneficial effects of the second aspect to the seventh aspect, refer to the beneficial effects of the first aspect. Details are not described herein again.

### BRIEF DESCRIPTION OF DRAWINGS

FIG. 1 is a diagram of a structure of an electronic device according to an embodiment of this application;
FIG. 2(a) to FIG. 2(e) are a diagram of a fused item of a PC application engine;
FIG. 3 is a diagram of a software system architecture of an electronic device according to an embodiment of this application;
FIG. 4 shows a group of GUIs according to an embodiment of this application;
FIG. 5(a) to FIG. 5(c) show another group of GUIs according to an embodiment of this application;
FIG. 6 is a schematic flowchart of installing a Linux application, registering a default application and an application selector, and uninstalling the Linux application by using a proxy APK currently;
FIG. 7A and FIG. 7B are a schematic flowchart of a method for managing a cross-operating system application according to an embodiment of this application;
FIG. 8(a) and FIG. 8(b) are a schematic flowchart of registering a Linux application by a multi-application management module according to an embodiment of this application;
FIG. 9 is a diagram of another software system architecture of an electronic device according to an embodiment of this application;
FIG. 10A and FIG. 10B are a schematic flowchart of a method for managing a cross-operating system application according to an embodiment of this application; and
FIG. 11 is a schematic flowchart of a method for managing a cross-operating system application according to an embodiment of this application.

### DESCRIPTION OF EMBODIMENTS

The following describes technical solutions in embodiments of this application with reference to the accompanying drawings.

Terms used in the following embodiments are merely intended to describe particular embodiments, but are not intended to limit this application. The terms "one", "a", "the", "the foregoing", and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device equipped with iOS^{®}, Android^{®}, Microsoft^{®}, or another operating system. The portable electronic device may alternatively be another portable electronic device, like a laptop (Laptop) computer. It should be further understood that, in some other embodiments, the foregoing electronic device may not be the portable electronic device but a desktop computer.

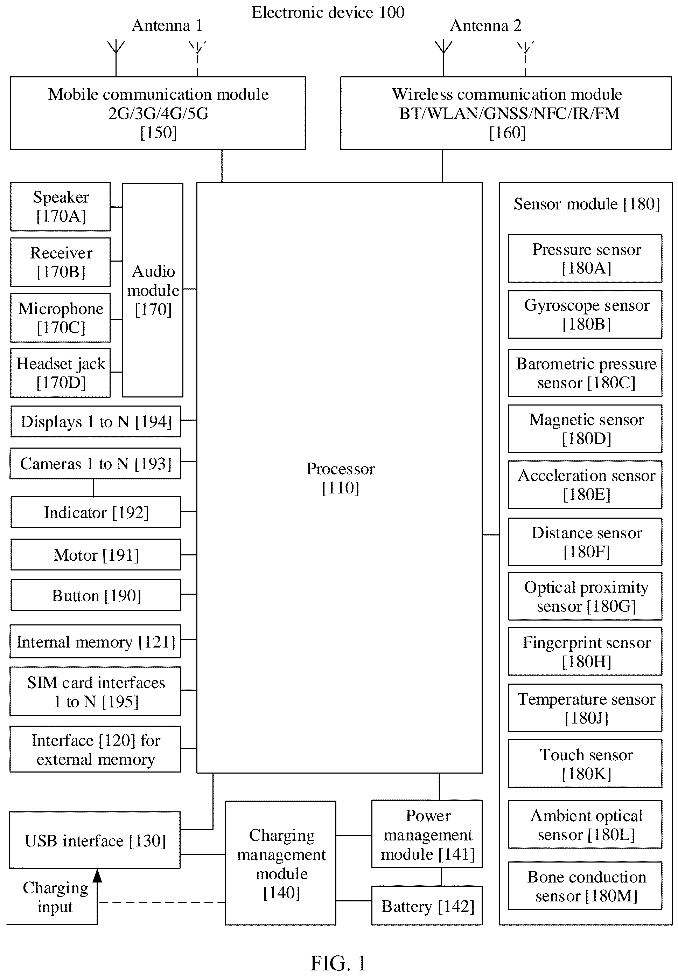

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control over instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The display 194 is configured to display an image, a video, and the like. The display 194 includes a display panel. The display panel may be a liquid crystal display (liquid crystal display, LCD), an organic light emitting diode (organic light emitting diode, OLED), an active-matrix organic light emitting diode (active-matrix organic light emitting diode, AMOLED), a flexible light emitting diode (flex light emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

The interface 120 for external memory may be configured to connect to an external storage card, for example, a micro SD card, to extend a storage capability of the electronic device 100. The external memory card communicates with the processor 110 through the interface 120 for external memory, to implement a data storage function. For example, files such as music and a video are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data or a phone book) created in a process of using the electronic device 100. In addition, the internal memory 121 may include a high-speed random access memory, or may include a nonvolatile memory, for example, at least one magnetic disk storage device, a flash memory, or a universal flash storage (universal flash storage, UFS).

Based on features of different operating systems, capabilities supported by a same application on different operating system platforms may be different. To meet a requirement of a user, an electronic device needs to run applications on different operating systems. For example, a same word processing application includes an Android version and a Linux version. A word processing application of the Linux version may provide more abundant functions. To meet a requirement of a user on using the word processing application of the Linux version on an Android platform computer, the Android platform computer needs to run the word processing application of the Linux version. Currently, an electronic device whose native system is an Android operating system or a Harmony operating system may run an application in another operating system by using a proxy service.

Before a software system architecture of the electronic device is described, several concepts mentioned in embodiments of this application are first described.

Default application: An operation of a task may be performed by a specific application. For example, a default application of a PDF document is an application #1. When the electronic device detects an operation of opening the PDF document by the user, the electronic device may start the application #1 in response to the operation to open the PDF document.

It may be understood that the default application may be changed. For example, an original default application of the PDF document is the application #1, and the electronic device may change the default application of the PDF document from the application #1 to an application #2 in response to an operation of the user.

Optional application: Operations of some tasks may be performed by multiple applications. For example, optional applications of the PDF document are an application #1 and an application #2. When detecting an operation of opening the PDF document by the user, the electronic device may display an application selection interface in response to the operation. The application selection interface includes icons of the application #1 and the application #2. The electronic device needs to determine, based on an operation of the user, whether to open the PDF document by using the application #1 or open the PDF document by using the application #2.

Activity (activity): is a basic component of the Android operating system and an interface for interacting with the user. The activity is one of basic units of a user interface. Generally, one activity represents one interface for interacting with the user. The activity may include a user interface (user interface, UI) element (for example, a control, text information, and an icon). In the Android operating system, the activity is disabled or enabled to control display of the UI element and an activity registration capability. When the activity is used, an activity layout needs to be first defined, the activity is instantiated and associated with the layout, and then an event is registered in the activity. When the user triggers these events, an application may respond accordingly. After the activity is created, the activity is stored in a stack.

It may be understood that another operating system may also include a component with a function similar to that of the activity in the Android operating system, and the component may have another name.

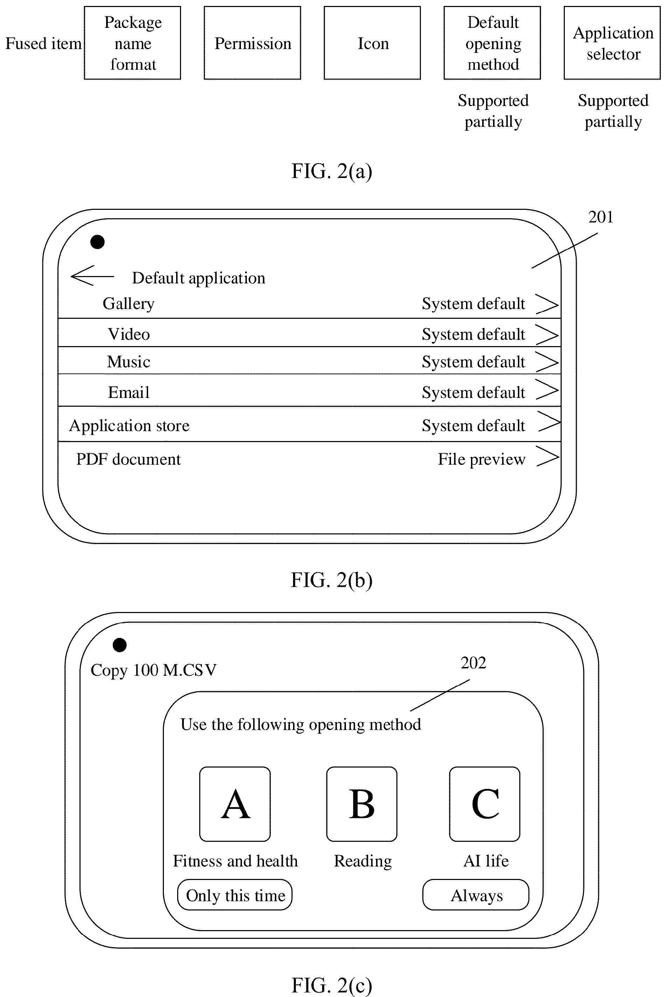

PC application engine: Based on a feature of the Harmony (Harmony) OS running Linux, the user can use a Linux application on an electronic device equipped with the Harmony OS, improving productivity. The PC application engine focuses on fusion experience. An icon of the Linux application is displayed in the same manner as that of an Android application. FIG. 2(a) to FIG. 2(e) are a diagram of a fused item provided by a PC application engine. As shown in FIG. 2(a), package name formats, permissions, and icons of a Linux application and an Android application may be fused by using a PC application engine. For a part of Linux applications, the PC application engine may further fuse default opening methods and application selectors. After the Linux application is installed on an electronic device, the electronic device may display a default application setting interface 201 shown in FIG. 2(b) and an application selection interface 202 shown in FIG. 2(c). In some cases, after the Linux application is installed on the electronic device, a name displayed in the default application setting interface 201 may be a name of the Linux application, or may be a name of the PC application engine.

However, a package management manner of the Linux application differs greatly from that of an Android native application mainly in the following aspects:
1. The Linux application is implemented by using a proxy application (APK) currently. The Android operating system uses an APK as a granularity for a default application and an application selector, and cannot distinguish between different Linux applications when running multiple Linux applications.
2. The Android operating system does not detect uninstallation when the Linux application is uninstalled. As a result, after the uninstallation, there is still residual application information registered by the proxy APK, and a corresponding file type fails to be opened.

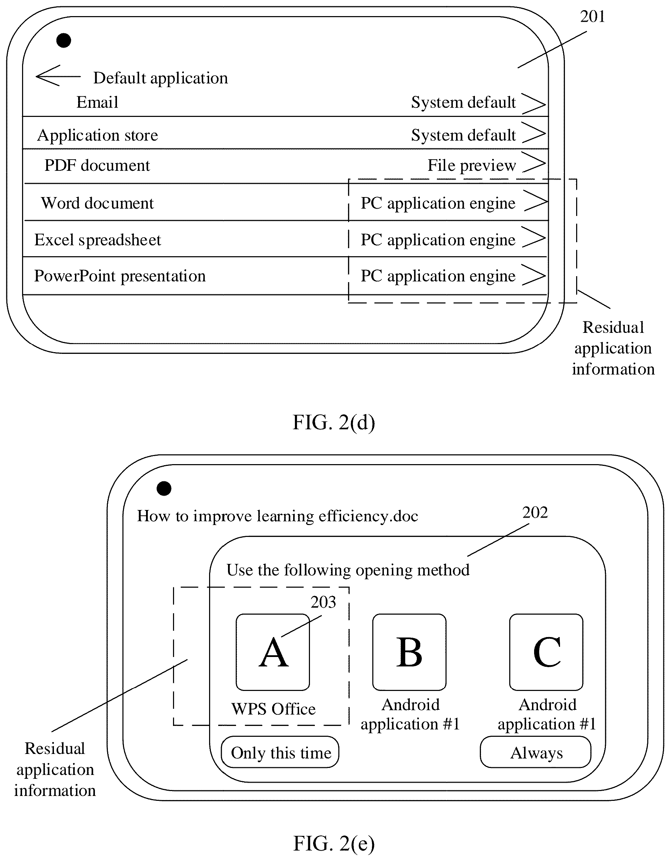

As shown in FIG. 2(d), a default application of a Word document, an Excel spreadsheet, and a PowerPoint presentation is a PC application engine (for example, WPS Office of a Linux version). After WPS Office of the Linux version is uninstalled, the default application setting interface 201 of the electronic device still displays a default application of a PDF document and the Excel spreadsheet as the PC application engine, and is not updated in a timely manner.

As shown in FIG. 2(e), the PC application engine (for example, WPS Office of the Linux version) may be an optional application for opening the Word document. When the user opens the PDF document, the application selection interface 202 still displays an application icon 203 of WPS Office, and is not updated in a timely manner.

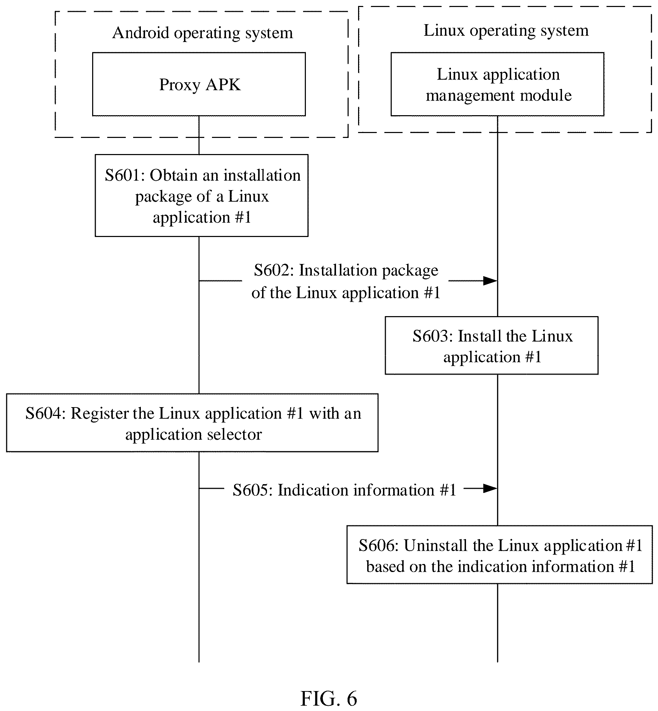

It should be noted that, for descriptions of a cause of the foregoing problem, refer to descriptions of FIG. 6. Details are not described herein.

The following describes a software system architecture of an electronic device by using an example in which the electronic device is equipped with an Android system and runs Linux by using a container or a virtual machine.

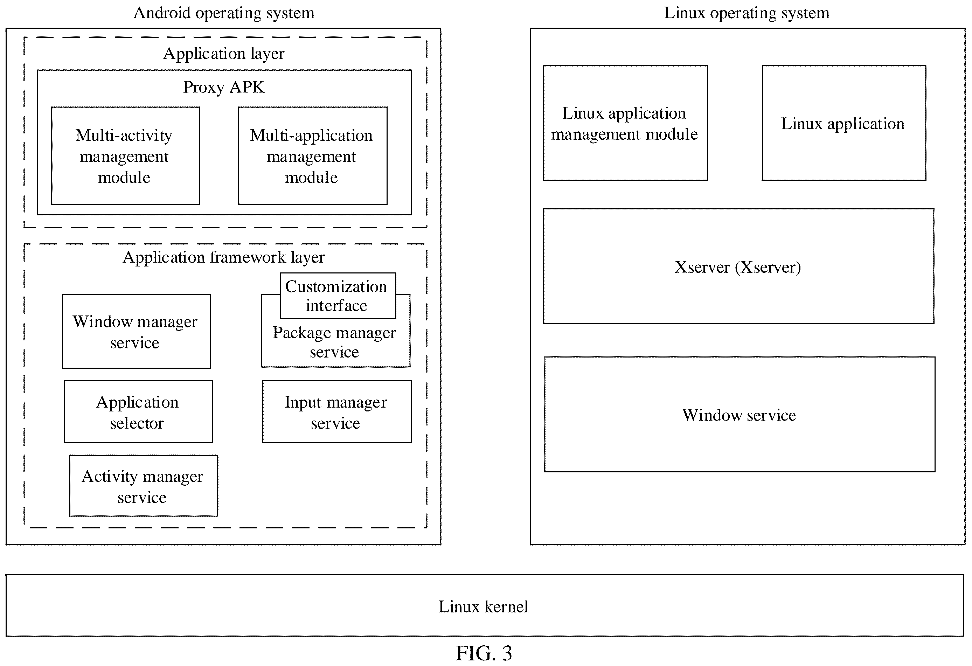

FIG. 3 is a diagram of a software system architecture of an electronic device according to an embodiment of this application. A first operating system of the electronic device is an Android operating system, and a second operating system is a Linux operating system. As shown in FIG. 3, the Android operating system and the Linux operating system use a Linux kernel (Linux kernel). The Android operating system may further include an application layer and an application framework layer. The Linux operating system may include a Linux application management module, a Linux application, an Xserver (Xserver), and a window service.

The application framework layer of the Android operating system provides an application programming interface (application programming interface, API) and a programming framework for an application at the application layer, and may include an input manager service (input manager service, IMS), an activity manager service (activity manager service, AMS), a window manager service (window manager service, WMS), a package manager service (package manager service, PMS), and an application selector. The IMS is used to manage an input operation detected by the electronic device. The AMS is used to manage an activity (activity) of each application. The WMS is used to manage a window of each application. The PMS is used to manage package information, including application installation, uninstallation, and update, parsing of AndroidManifest.xml, and the like. The application selector is used to manage an optional application for opening a file type. For example, the application selector may determine that optional applications for opening a doc file are an application #1 and an application #2 and optional applications for opening an rar file are an application #3 and an application #4.

In some embodiments, the application selector is further used to manage a default application of a file type. For example, the application selector may determine that a default application for opening the doc file is the application #1 and a default application for opening the rar file is the application #3. In other words, when the electronic device detects an operation of opening the doc file by a user, the application #1 may be directly started.

Alternatively, in some other embodiments, another module may alternatively manage a default application of a file type.

It should be noted that the Android operating system of the electronic device may further include a hardware abstraction layer and a system runtime library that are not shown in FIG. 3. The system runtime library may include an Android runtime library. The Android runtime library may include a core library and a virtual machine. The Android runtime library is responsible for scheduling and managing the Android operating system. The system runtime library may further include a C library or a C++ library. The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection. The hardware abstraction layer may include various sensors, for example, various sensors described in FIG. 1.

In a process in which the electronic device runs a Linux application across systems, the electronic device may start a proxy Android application package (Android application package, APK) of the application layer on the Android operating system. The Android system exchanges data with the Linux operating system by using the proxy APK, and displays an application that corresponds to the proxy APK and that is run on the Linux operating system.

The proxy APK may also be referred to as a shell application or a shell APK, and is mainly responsible for creating a window on an Android operating system side, displaying content, and capturing keyboard and mouse events.

There is a communication channel between the proxy APK and the Linux operating system, and the proxy APK may transmit information to the Linux operating system, and may also receive information sent by the Linux system. For example, the proxy APK may send, to the Linux operating system, start information used to start an application in the Linux operating system, may also send a detected input event to the Linux operating system, and may further receive window display information (for example, refreshing a display interface) or window management information (for example, adjusting a display size or position) sent by the Linux operating system.

The proxy APK may include a main (main) activity and an app activity. The main activity is a main program of the proxy APK and is used to start the proxy APK. The app activity may be an activity corresponding to an application running in the Linux operating system. For example, after the Linux operating system starts an application based on the proxy APK, the proxy APK may establish, in the proxy APK based on information sent by the Linux operating system, an app activity corresponding to the application.

The proxy APK may further register application information of the Linux application, so that the Linux application is associated with at least one file type. The association between the Linux application and the at least one file type may be understood as causing the Linux application to become a default application for opening a file of the at least one file type, or causing the Linux application to become an optional application for opening a file of the at least one file type.

For example, the Linux operating system includes a Linux application #1, and the proxy APK may register application information of the Linux application #1, so that the Linux application #1 becomes a default application for opening a PDF file.

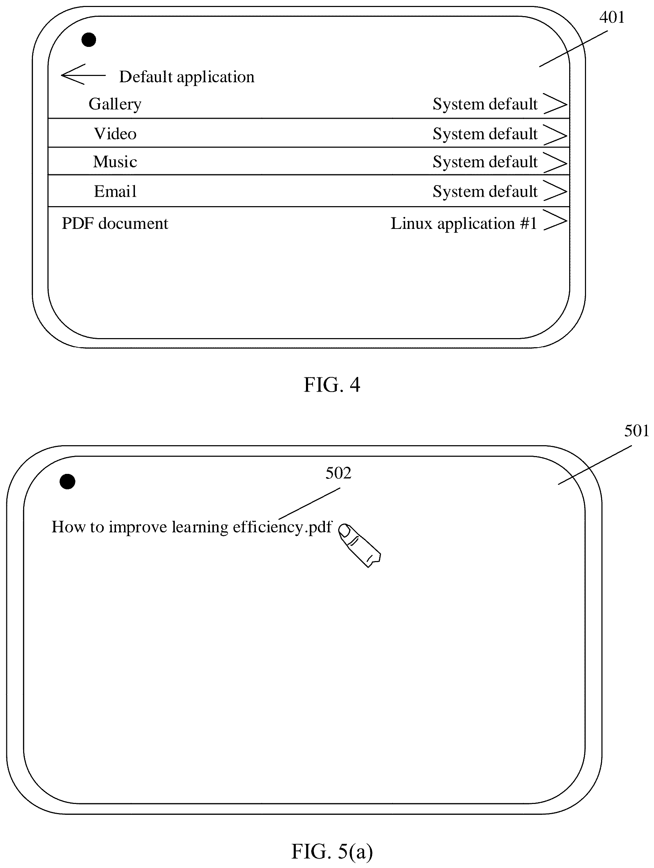

FIG. 4 shows a group of graphical user interfaces (graphical user interface, GUI) according to an embodiment of this application.

As shown in FIG. 4, an electronic device displays an interface 401. The interface 401 is a default application setting interface. After the electronic device registers a Linux application #1 as a default application of a PDF file, the electronic device may display a corresponding default application setting in the interface 401.

When the electronic device detects an operation of opening a file #1 by a user, where the file #1 is a PDF file, the electronic device may start the proxy APK in response to the operation, and obtain an interface of the Linux application #1 by using the proxy APK, to display content of the file #1.

For another example, the Linux operating system includes the Linux application #1, and the proxy APK may register the Linux application #1 with an application selector corresponding to the PDF file. When the electronic device detects the operation of opening the file #1 by the user, where the file #1 is a PDF file, the electronic device may display an application selection interface, and the application selection interface includes an icon of the Linux application #1. The following provides descriptions with reference to FIG. 5(a) to FIG. 5(c).

FIG. 5(a) to FIG. 5(c) show another group of GUIs according to an embodiment of this application.

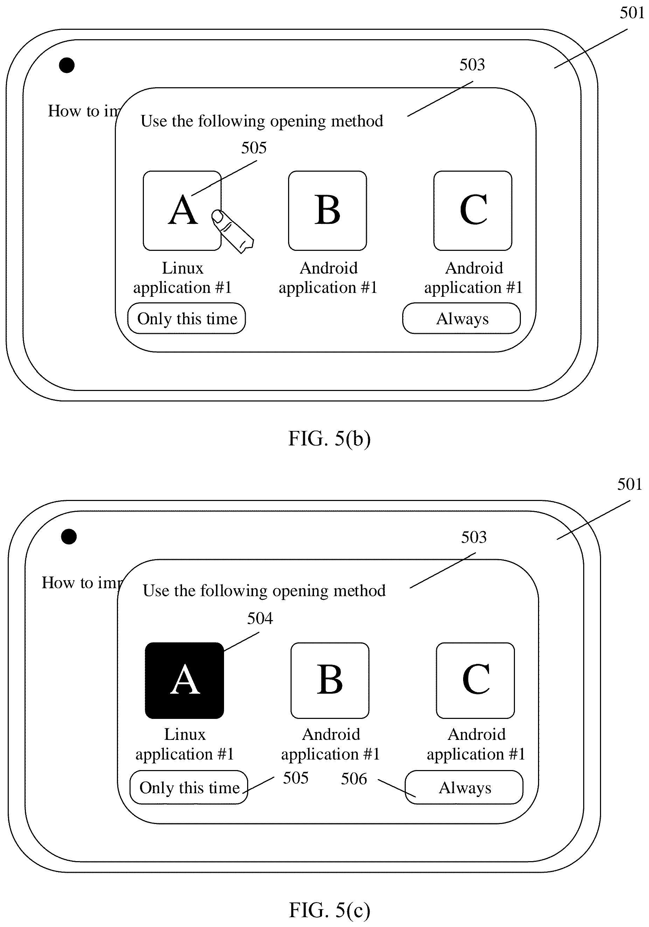

As shown in FIG. 5(a), an electronic device displays an interface 501, where the interface 501 includes a file 502, and the file 502 is a PDF file. The electronic device detects an operation of tapping the file 502 by a user, and may display, in response to the operation, a GUI shown in FIG. 5(b).

As shown in FIG. 5(b), the electronic device may display an application selection interface 503 in response to the operation of tapping the file 502 by the user. The application selection interface 503 includes an icon 504, and the icon 504 is an icon corresponding to a Linux application #1. The electronic device detects an operation of selecting the icon 504 by the user, and may display, in response to the operation, a GUI shown in FIG. 5(c).

As shown in FIG. 5(c), the electronic device may highlight the icon 504 in response to the operation of selecting the icon 504 by the user. When detecting an operation of tapping a control 505 by the user, the electronic device may start a proxy APK in response to the operation, and obtain an interface of the Linux application #1 by using the proxy APK, to display content of the file 502. When detecting an operation of tapping a control 506 by the user, the electronic device may start the proxy APK in response to the operation, obtain an interface of the Linux application #1 by using the proxy APK, to display content of the file 502, and register the Linux application #1 as a default application of the PDF file by using the proxy APK.

With reference to FIG. 6, the following describes a schematic flowchart of installing a Linux application, registering a default application and an application selector, and uninstalling the Linux application by using a proxy APK currently.

As shown in FIG. 6, a method includes the following steps.

S601: A proxy APK obtains an installation package of a Linux application #1.

For example, the proxy APK may obtain the installation package by using an application store or the like.

S602: The proxy APK sends the installation package of the Linux application #1 to a Linux application management module.

Correspondingly, the Linux application management module receives the installation package of the Linux application #1 sent by the proxy APK.

S603: The Linux application management module installs the Linux application #1.

The Linux application management module may receive the Linux application management module to install the Linux application #1.

S604: The proxy APK registers the Linux application #1 with an application selector.

The proxy APK may register the Linux application #1 with the application selector, so that the Linux application #1 becomes a default application of a file type #1, or the Linux application #1 becomes an optional application corresponding to a file type #1.

S605: The proxy APK sends indication information #1 to the Linux application management module.

Correspondingly, the Linux application management module receives the indication information #1 sent by the proxy APK, where the indication information #1 indicates to uninstall the Linux application #1.

S606: The Linux application management module uninstalls the Linux application #1 based on the indication information #1.

In conclusion, an electronic device manages multiple Linux applications by using one proxy APK. However, in an Android operating system, a default application is registered and an application selector is managed by using an APK as a granularity. When there are multiple Linux applications, the Android operating system cannot distinguish between different Linux applications. In addition, after the Linux application is uninstalled, an Android operating system side cannot detect the uninstallation currently. As a result, after the uninstallation, there is still residual application information registered by the proxy APK. The GUIs shown in FIG. 4 and FIG. 5(a) to FIG. 5(c) are used as an example. After the Linux application #1 is uninstalled, information about the Linux application #1 is still retained in the interface 401 and the application selection interface 503. As a result, the PDF file fails to be opened, and user experience is degraded.

Based on this, an embodiment of this application provides a method for managing a cross-operating system application. A first operating system may detect a status of an application in a second operating system, and adjust a status of a default application and a status of an application selection interface in a timely manner based on the status of the application on the second operating system.

Still refer to FIG. 3. This embodiment of this application relates to a multi-activity (activity) management module and a multi-application management module in the proxy APK. The multi-activity management is used to manage an app activity corresponding to a Linux application, and the multi-application management module is used to record a status of the Linux application and store application information of the Linux application. In addition, the PMS in this embodiment of this application has an interface for communicating with the proxy APK, and the proxy APK may transfer information to the PMS through the interface.

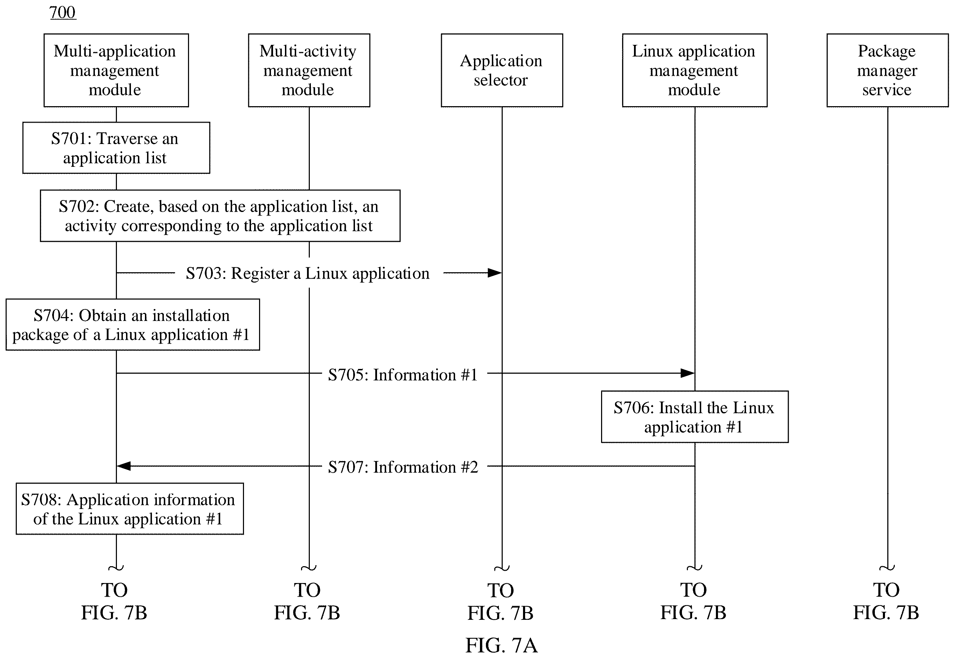

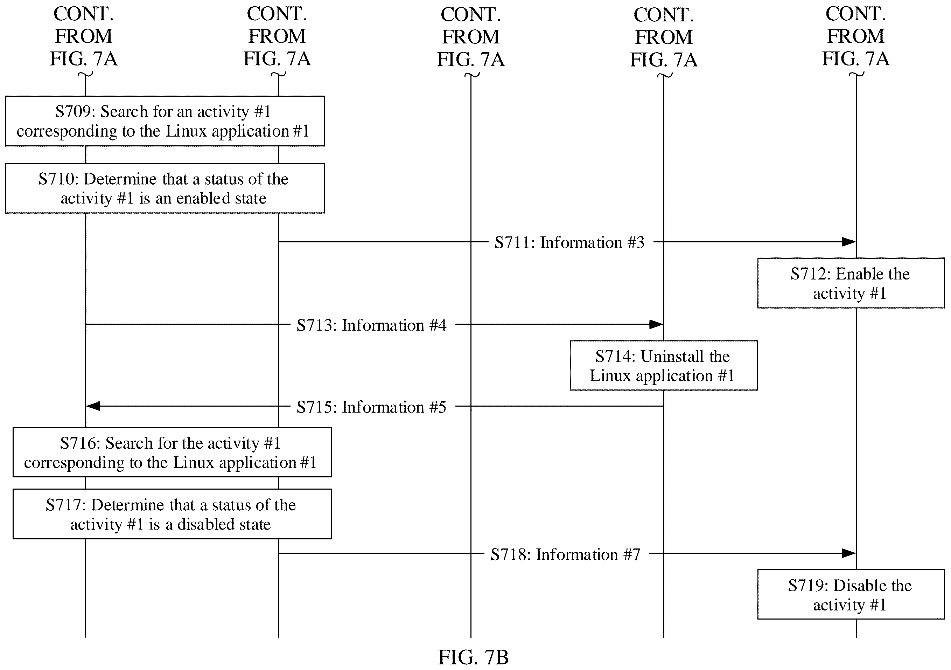

FIG. 7A and FIG. 7B are a schematic flowchart of a method 700 for managing a cross-operating system application according to an embodiment of this application. As shown in FIG. 7A and FIG. 7B, the method 700 includes the following steps.

S701: A multi-application management module traverses an application list.

The application list is an application list of Linux applications. The application list may include but is not limited to application information such as a package name, a version number, and an application description of a Linux application.

A manner of obtaining the application list is not limited in this embodiment of this application.

For example, the application list may be preset in a first operating system. It may be understood that when the first operating system is updated, the application list may also be updated.

For example, the application list may be configured by a user.

S702: A multi-activity management module creates, based on the application list, an activity corresponding to the application list.

The multi-application management module traverses the application list, and may communicate with the multi-activity management module, so that the multi-activity management module may create, based on the application list, an activity corresponding to a Linux application.

For example, the activity created by the multi-activity management module may correspond to a package name of the Linux application.

For example, the application list includes a Linux application #1, and the multi-activity management module may create an activity #1. The activity #1 corresponds to a package name of the Linux application #1.

For another example, the application list includes a Linux application #1 and a Linux application #2, and the multi-activity management module may create an activity #1 and an activity #2. The activity #1 corresponds to a package name of the Linux application #1, and the activity #2 corresponds to a package name of the Linux application #2.

It may be understood that in the example shown in FIG. 7A and FIG. 7B, an Android operating system is used as an example of an operating system. When the operating system is not limited, the multi-activity management module may also be referred to as a multi-component management module.

S703: The multi-application management module registers the Linux application with an application selector.

The multi-application management module may register the Linux application with the application selector. The multi-application management module registers the Linux application with the application selector by using the activity created in step S602. In other words, the multi-application management module may register an activity with the application selector, and the activity corresponds to the Linux application. Therefore, that the multi-application management module registers the activity with the application selector may be understood as that the multi-application management module registers the Linux application with the application selector.

It may be understood that after registering the Linux application with the application selector, the multi-application management module may determine a correspondence between a Linux application and a file type. The following provides descriptions with reference to FIG. 7A and FIG. 7B.

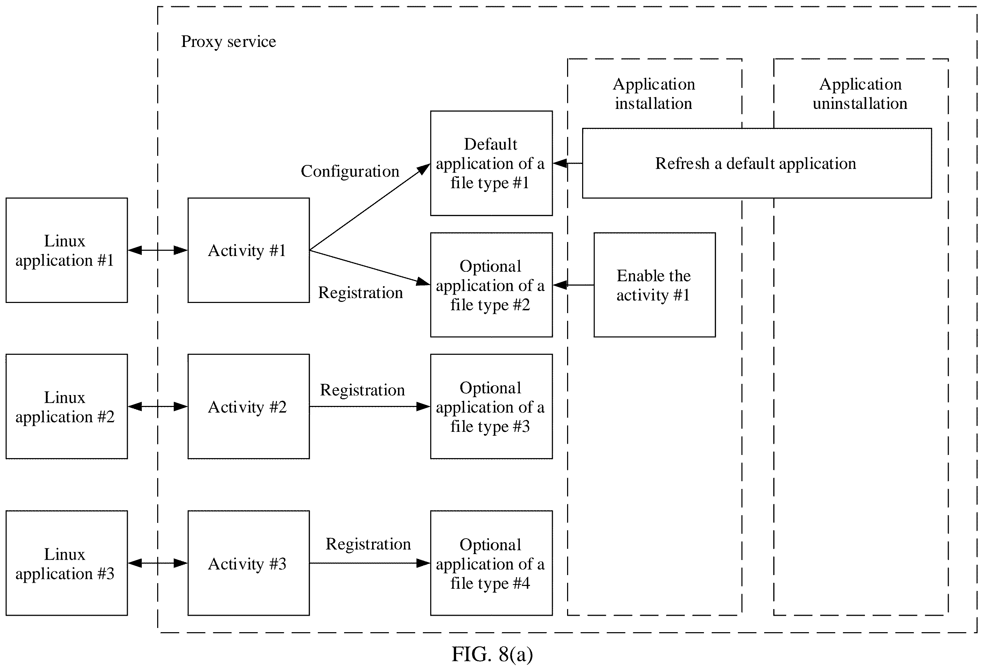

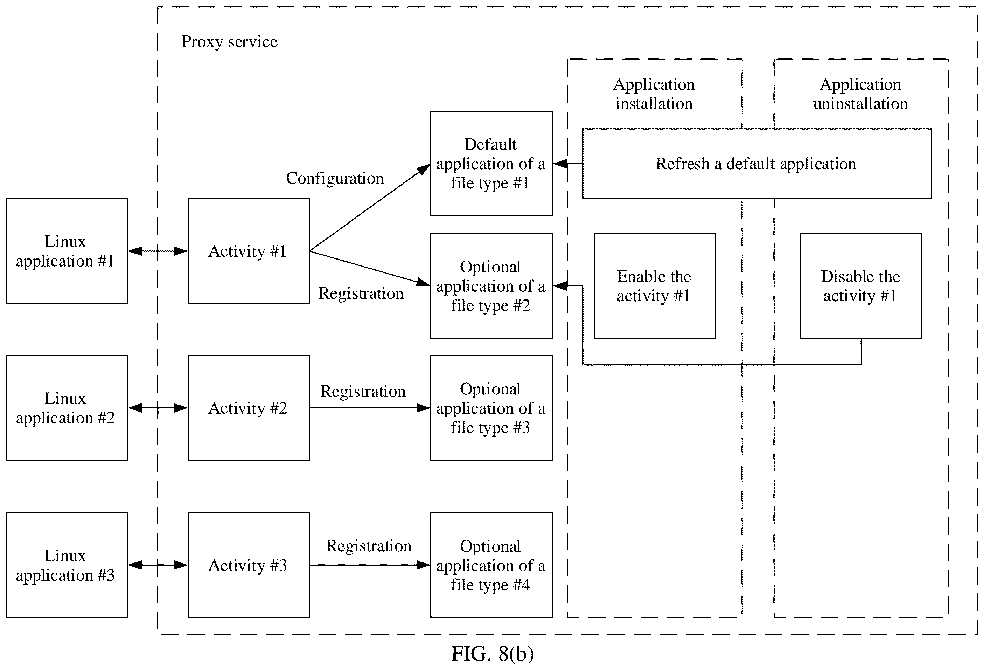

FIG. 8(a) and FIG. 8(b) are a schematic flowchart of registering a Linux application by a multi-application management module according to an embodiment of this application.

As shown in FIG. 8(a), after traversing an application list, the multi-application management module determines that a Linux application #1, a Linux application #2, and a Linux application #3 are included, and the multi-application management module may create a corresponding activity #1, activity #2, and activity #3. The multi-application management module may register the foregoing three activities with an application selector. The Linux application #1 corresponding to the activity #1 is registered as a default application of a file type #1 and an optional application of a file type #2, the Linux application #2 corresponding to the activity #2 is registered as an optional application of a file type #3, and the Linux application #3 corresponding to the activity #3 is registered as an optional application of a file type #4.

Code used in step S701 to step S703 is as follows:
For appInfo in appList:
RegisterAPPMimeType(appInfo.mimeType);
RegisterDefaultApp();
CreateActivityByAPPList(appList);

It should be noted that the correspondence between the Linux application and the file type that is established by the multi-application management module in step S703 is in an inactive state (also referred to as a disabled state). In other words, the correspondence established by using steps S701 to S703 has not taken effect, and the correspondence can be activated (also referred to as enabled) only after a corresponding Linux application is installed on an electronic device. For details, refer to descriptions of subsequent steps.

For example, the Linux application #1 is registered as the optional application of the file type #2. In response to an operation of opening the file type #2 by the user, the electronic device may display an application selection interface, but the application selection interface does not include an icon corresponding to the Linux application #1.

In other words, that the correspondence between the Linux application and the file type that is established by the multi-application management module is in the inactive state may be understood as that an activity corresponding to the Linux application is in a disabled (disable) state.

S704: The multi-application management module obtains an installation package of the Linux application #1.

A manner in which the multi-application management module obtains the installation package of the Linux application #1 is not limited in this embodiment of this application.

For example, the multi-application management module may obtain the installation package of the Linux application #1 by using the application store.

For example, the multi-application management module may obtain the installation package of the Linux application #1 from an official website of the Linux application #1.

S705: The multi-application management module sends information #1 to a Linux application management module.

Correspondingly, the Linux application management module receives the information #1 sent by the multi-application management module, where the information #1 indicates to install the Linux application #1.

In some embodiments, the information #1 includes the installation package of the Linux application #1.

In some embodiments, the information #1 includes a storage path of the Linux application #1.

S706: The Linux application management module installs the Linux application #1.

In some embodiments, the information #1 includes the installation package of the Linux application #1. After receiving the information #1, the Linux application management module may obtain the installation package of the Linux application #1, and then install the Linux application #1.

In some embodiments, the information #1 includes the storage path of the Linux application #1. After receiving the information #1, the Linux application management module may obtain the installation package of the Linux application #1 based on the storage path, and then install the Linux application #1.

S707: The Linux application management module sends information #2 to the multiple-application manager.

Correspondingly, the multi-application manager receives the information #2 sent by the Linux application management module, where the information #2 indicates that the Linux application #1 has been installed.

S708: The multi-application manager stores application information of the Linux application #1.

After determining that the Linux application #1 is installed, the multi-application manager may store the application information of the Linux application #1. The application information includes but is not limited to a package name and an installation path.

S709: The multi-activity management module searches for the activity #1 corresponding to the Linux application #1.

After determining that the Linux application #1 is successfully installed, the multi-application manager may communicate with the multi-activity management module, so that the multi-activity management module may search created activities for the activity #1 corresponding to the Linux application #1.

For example, the multi-activity management module creates three activities in total: the activity#1, the activity#2, and the activity#3. The activity #1 corresponds to the Linux application #1, the activity #2 corresponds to the Linux application #2, and the activity #3 corresponds to the Linux application #3. After determining that the Linux application #1 is successfully installed, the multi-application management module may communicate with the multi-activity management module, and the multi-activity management module may find the corresponding activity #1 based on the package name of the Linux application #1.

S710: The multi-activity management module determines that a status of the activity #1 is an enabled state.

The multi-activity management module finds the activity #1. Because the Linux application #1 corresponding to the activity #1 has been installed, the multi-activity management module may determine that the status of the activity #1 is the enabled (enable) state.

S711: The multi-activity management module sends information #3 to a PMS.

Correspondingly, the PMS receives the information #3 sent by the multi-activity management module, where the information #3 indicates to enable the activity #1, and the information #3 may include a name of the activity #1.

S712: The PMS enables the activity#1.

After receiving the information #3, the PMS may determine and enable the activity #1.

It may be understood that, after the PMS enables the activity #1, a relationship between the Linux application #1 corresponding to the activity #1 and the file type is activated.

For example, in the foregoing step, the Linux application #1 is registered as the default application of the file type #1 and the optional application of the file type #2. The electronic device may start the proxy APK in response to an operation of opening a file of the file type #1 by the user, start the Linux application #1 by using the proxy APK, and then open the file of the file type #1 by using the Linux application #1. The electronic device may display an application selection interface in response to an operation of opening a file of the file type #2 by the user. The application selection interface includes the icon of the Linux application #1.

Code used in step S704 to step S712 is as follows:
DownloadApp(packageName);
CopyPackageToContainer(packageFilePath);
InstallContainerAPP(containerID, packageFilePath);
SaveAPPInfo(packageName, InstallPath);
GetActivityByPackageName(packageName);
   EnableActivity(activityName);

Still refer to FIG. 8(a) and FIG. 8(b). As shown in FIG. 8(a), because the Linux application #1 has been installed, the activity #1 may be enabled. In addition, because the Linux application #2 and the Linux application #3 are not installed, the activity #2 and the activity #3 are not enabled.

It should be noted that an example in which the first operating system is an Android operating system and a second operating system is a Linux operating system is used when FIG. 7A and FIG. 7B are described. However, this embodiment of this application is not limited thereto. For example, the first operating system may alternatively be a Harmony operating system, and the second operating system may alternatively be a Windows operating system.

It should be further noted that the multi-application management module and the multi-activity management module in the proxy APK are merely logical function division, and may be other division during actual implementation. For example, in some other embodiments of this application, the multi-application management module and the multi-activity management module may be integrated into one module. For another example, in some other embodiments of this application, the multi-application management module and the multi-activity management module may be divided into three modules, and the three modules perform the steps performed by the multi-application management module and the multi-activity management module in the foregoing steps.

In this embodiment of this application, the proxy APK may first pre-register at least one activity with the application selector, and the at least one activity corresponds to an application on the second operating system. After the application on the second operating system is installed on the second operating system running in the container, the second operating system may send information to notify that installation of the application on the second operating system is completed. After determining that installation of the application on the second operating system is completed, the proxy APK may communicate with the PMS to enable an activity corresponding to the application on the second operating system, so as to activate an association relationship between the application on the second operating system and one or more file types, so that the application on the second operating system becomes a default application or an optional application of the one or more file types. In this embodiment of this application, an interface is added to the PMS, so that a path from the second operating system in the container to a first operating system side is established, so that the first operating system side can detect installation of the application on the second operating system in a timely manner, and the application on the second operating system can be better managed, to enhance user experience.

In addition, in this embodiment of this application, the proxy APK creates the activity based on the application list. Therefore, a correspondence between an application on the second operating system and an activity is established. Because each activity has a different name, the first operating system can distinguish between different applications on the second operating system.

According to the method provided in this embodiment of this application, when multiple Linux applications are installed on the Android operating system, file types supported by different applications may be separately registered, and life cycles of a registration entity and Linux are synchronously managed, so that when the Linux application is installed or uninstalled, a default application and an application selector of the system can be synchronously updated, enhancing user experience.

As mentioned above, after the Linux application is uninstalled, currently, the Android operating system side cannot detect the uninstallation. As a result, after the uninstallation, there is still residual application information registered by the proxy APK. Therefore, in this embodiment of this application, when the Linux application is uninstalled, the Linux application management module may also send uninstallation information to the proxy APK after the Linux application is uninstalled, to disable the corresponding activity. For details, still refer to FIG. 7A and FIG. 7B.

As shown in FIG. 7A and FIG. 7B, in some embodiments of this application, the method 700 further includes the following steps.

S713: The multi-application management module sends information #4 to the Linux application management module.

Correspondingly, the Linux application management module receives the information #4 sent by the multi-application management module, where the information #4 indicates to uninstall the Linux application #1.

In some embodiments, the information #4 includes the package name of the Linux application #1.

In some embodiments, the information #4 includes the installation path of the Linux application #1.

For example, the multi-application management module detects an operation of uninstalling the Linux application #1 by the user, and may send the information #4 to the Linux application management module in response to the operation.

In this embodiment of this application, the operation of uninstalling the Linux application #1 by the user is not limited.

For example, the user may uninstall the Linux application #1 in a management interface of the application store.

For another example, the user may touch and hold the icon of the Linux application #1 on a desktop, and then select a deletion control to uninstall the Linux application #1.

S714: The Linux application management module uninstalls the Linux application #1 based on the information #4.

After receiving the information #4, the Linux application management module may uninstall the Linux application #1 based on the information #4.

S715: The Linux application management module sends information #5 to the multi-application management module.

Correspondingly, the multi-application management module receives the information #5 sent by the Linux application, where the information #5 indicates that the Linux application #1 has been uninstalled.

After uninstalling the Linux application #1, the Linux application management module may send the information #5 to the multi-application management module to indicate that the Linux application #1 has been uninstalled.

S716: The multi-activity management module searches for the activity #1 corresponding to the Linux application #1.

After determining that the Linux application #1 is uninstalled, the multi-application manager may communicate with the multi-activity management module, so that the multi-activity management module may search the created activities for the activity #1 corresponding to the Linux application #1.

For example, the multi-activity management module creates three activities in total: the activity#1, the activity#2, and the activity#3. The activity #1 corresponds to the Linux application #1, the activity #2 corresponds to the Linux application #2, and the activity #3 corresponds to the Linux application #3. After determining that uninstallation of the Linux application #1 is completed, the multi-application management module may communicate with the multi-activity management module, and the multi-activity management module may find the corresponding activity #1 based on the package name of the Linux application #1.

S717: The multi-activity management module determines that a status of the activity #1 is a disabled state.

The multi-activity management module finds the activity #1. Because the Linux application #1 corresponding to the activity #1 has been uninstalled, the multi-activity management module may determine that the status of the activity #1 is the disabled (disable) state.

S718: The multi-activity management module sends information #6 to the PMS.

Correspondingly, the PMS receives the information #6 sent by the multi-activity management module, where the information #6 indicates to disable the activity #1, and the information #6 may include the name of the activity #1.

S719: The PMS disables the activity #1.

After receiving the information #6, the PMS may determine and disable the activity #1.

It may be understood that, after the PMS disables the activity #1, the relationship between the Linux application #1 corresponding to the activity #1 and the file type is deactivated. In other words, the Linux application #1 is no longer a default application or an optional application of a file type.

For example, before the Linux application #1 is uninstalled, the Linux application #1 is the default application of the file type #1 and the optional application of the file type #2. After the Linux application #1 is uninstalled, the electronic device detects an operation of opening a file of the file type #1 by the user, and in response to the operation, may prompt the user that the Linux application #1 has been uninstalled. The electronic device detects an operation of opening a file of the file type #2 by the user, and may display an application selection interface in response to the operation. The application selection interface no longer includes the icon of the Linux application #1.

Code used in step S713 to step S719 is as follows:

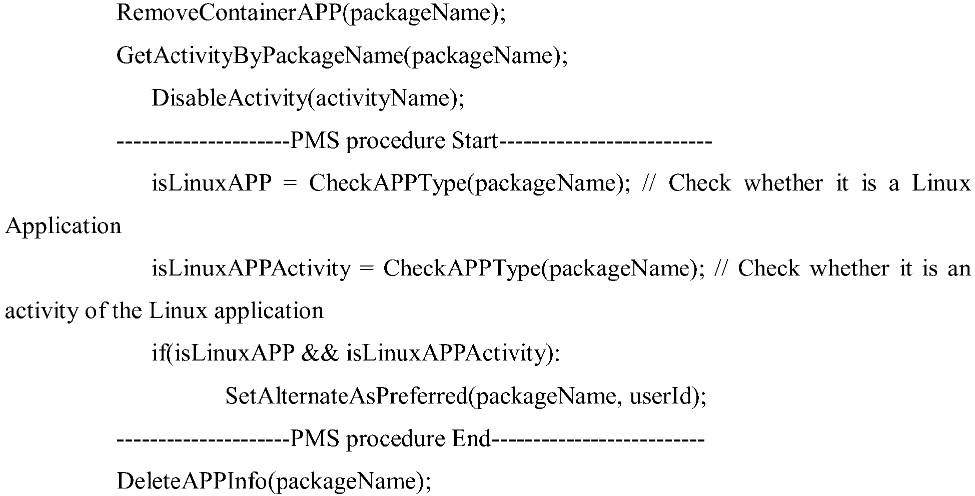

Still refer to FIG. 8(a) and FIG. 8(b). As shown in FIG. 8(b), because the Linux application #1 has been uninstalled, the activity #1 may be changed from the enabled state to the disabled state.

In this embodiment of this application, the proxy APK may first pre-register the at least one activity with the application selector, and the at least one activity corresponds to the application on the second operating system. When the application on the second operating system has been installed, the activity corresponding to the application on the second operating system is in the enabled state. After the application on the second operating system is uninstalled on the second operating system running in the container, the second operating system may send information to notify that the application on the second operating system has been uninstalled. After determining that the application on the second operating system has been uninstalled, the proxy APK may communicate with the PMS to disable the activity corresponding to the application on the second operating system, so as to deactivate the association relationship between the application on the second operating system and the one or more file types, so that the application on the second operating system is no longer the default application or the optional application of the one or more file types. In this embodiment of this application, the interface is added to the PMS, so that the path from the second operating system in the container to the first operating system side is established, so that the first operating system side can detect uninstallation of the application on the second operating system in a timely manner, and the application on the second operating system can be better managed, to enhance user experience. In addition, in this embodiment of this application, the proxy APK creates the activity based on the application list. Therefore, the correspondence between the application on the second operating system and the activity is established. Because each activity has a different name, the first operating system can distinguish between different applications on the second operating system.

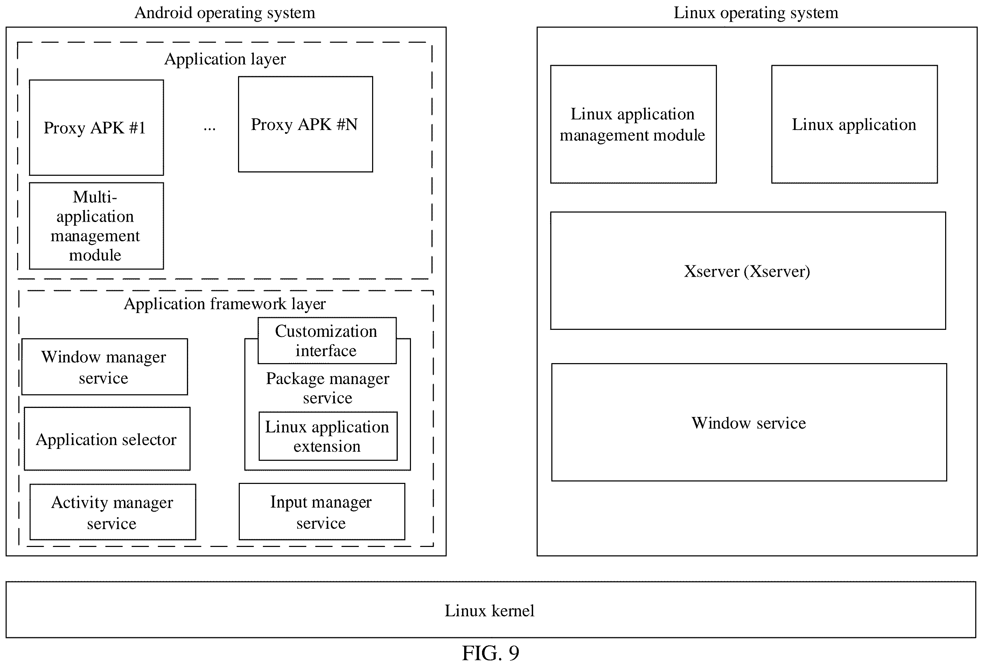

When the foregoing method for managing a cross-operating system application is described, the electronic device may manage multiple Linux applications in the container by using one proxy APK. However, this embodiment of this application is not limited thereto. In some other embodiments of this application, each Linux application in the container corresponds to one proxy APK. The following describes another software system architecture provided in an embodiment of this application with reference to FIG. 9.

As shown in FIG. 9, an Android operating system and a Linux operating system use a (Linux kernel). The Android operating system may further include an application layer and an application framework layer. The Linux operating system may include a Linux application management module, a Linux application, an Xserver (Xserver), and a window service.

The application layer of the Android operating system includes multiple proxy APKs and a multi-application management module, and the application framework layer may include an IMS, an AMS, a WMS, a PMS, and an application selector.

Different from the software system architecture shown in FIG. 3, the multi-application management module shown in FIG. 9 is independent of the proxy APK, and the multi-application management module shown in FIG. 3 is a module of the proxy APK.

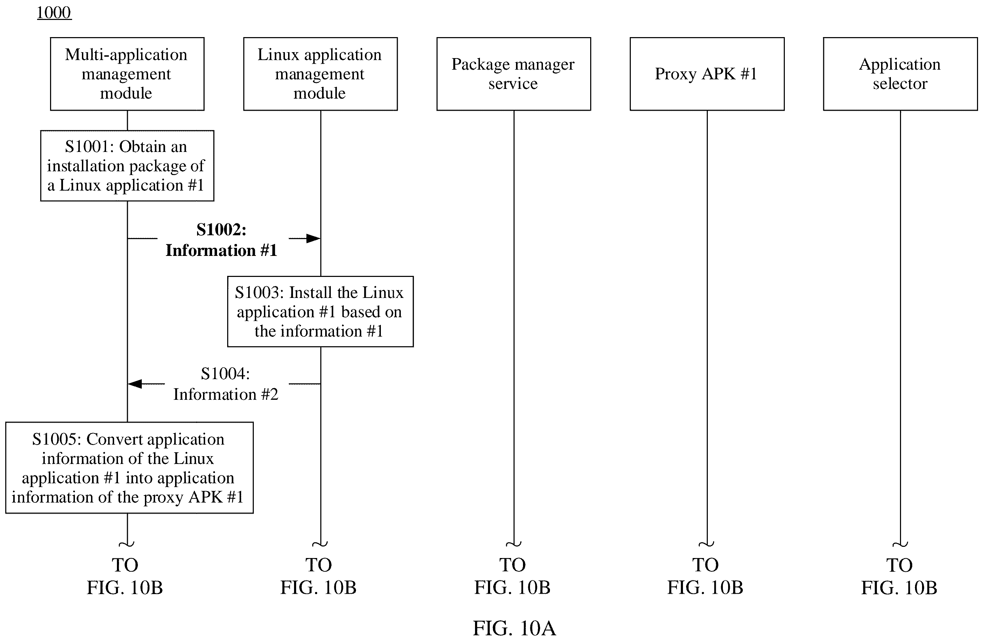

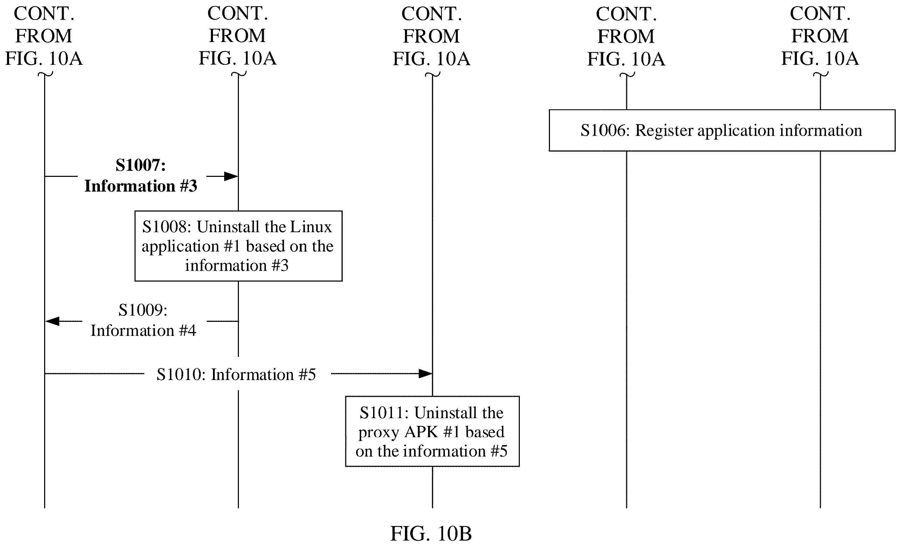

In addition to including an interface for communicating with the multi-application management module in the PMS shown in FIG. 9, the PMS may further provide a Linux application extension service, that is, the PMS is preset with a preset rule, and may provide a capability of converting application information of a Linux application into application information of an Android application. As shown in Table 1, an application package name, an application version, an application icon, and the like of a Linux application are converted into a format of an Android application. After the application information of the Linux application is converted into the application information of the Android application, the converted application information of the Android application may be bound to a proxy APK, so as to complete binding between the Linux application and the proxy APK. For specific descriptions, refer to descriptions of FIG. 10A and FIG. 10B.

**Table 1 Example table of converting application information of a Linux application into application information of an Android application**

| **Attribute** | **Description** | **Android application** | **Linux application** |
|---|---|---|---|
| Packagename | Application package name | com.kingsoft. moffice_pro | Wps-Office |
| version | Application version | 13.28.0 (1370) | 22.10 |
| Icon | Application icon | ID | ID |
| description | Application description | Custom | Linux WPS application |
| Permission | Permission | Dynamic application | Fixed permission |
| MainActivity | Main window | Custom | shellActivity (fixed) |
| versionCode | | Application fixed value | Fixed value (not changing with an application) |
| compileSdk Version | | Application fixed value | Fixed value (not changing with an application) |
| compileSdk VersionCodename | | Application fixed value | Fixed value (not changing with an application) |

It should be noted that the Android operating system of the electronic device may further include a hardware abstraction layer and a system runtime library that are not shown in FIG. 9.

FIG. 10A and FIG. 10B are a schematic flowchart of a method 1000 for managing a cross-operating system application according to an embodiment of this application. As shown in FIG. 10A and FIG. 10B, the method includes the following steps.

S1001: A multi-application management module obtains an installation package of a Linux application #1.

S1002: The multi-application management module sends information #1 to a Linux application management module.

Correspondingly, the Linux application management module receives the information #1 sent by the multi-application management module, where the information #1 indicates the Linux application management module to install the Linux application #1.

S1003: The Linux application management module installs the Linux application #1 based on the information #1.

It should be understood that descriptions of step S1001 to step S1003 are similar to the foregoing descriptions. For brevity, details are not described herein again.

S1004: The Linux application management module sends information #2 to the multi-application management module.

Correspondingly, the multi-application management module receives the information #2 sent by the Linux application management module, where the information #2 indicates that the Linux application has been installed, and the information #2 includes application information of the Linux application #1.

S1005: The multi-application management module converts the application information of the Linux application #1 into application information of a proxy APK #1.

After receiving the information #2 sent by the Linux application management module, the multi-application management module may convert information about the Linux application #1 into application information #1 of an Android application, and associate the application information #1 of the Android application with the proxy APK #1.

In some embodiments, the proxy APK #1 is preset. After converting the information about the Linux application #1 into the application information #1 of the Android application, the multi-application management module may associate the application information #1 of the Android application with the preset proxy APK #1.

In some embodiments, the multi-application management module may create the proxy APK #1 based on the application information of the Android application.

S1006: The proxy APK #1 registers application information with an application selector.

The proxy APK #1 may register the application information with the application selector, so that the Linux application becomes a default application or an optional application of a file type #1.

It may be understood that the application information registered by the proxy APK #1 with the application selector is the application information #1 of the Android application.

In this embodiment of this application, after an application in a second operating system is successfully installed, application information of the application on the second operating system may be converted into application information of an application in a first operating system, and the converted application information of the application in the first operating system is associated with a proxy APK, that is, each application on the second operating system independently corresponds to one proxy APK. The proxy APK may register application information with the application selector, so that the application on the second operating system becomes a default application or an optional application of a file type. In this embodiment of this application, an interface for communicating with the proxy APK and a capability of converting the application information of the application on the second operating system into the application information of the application in the first operating system are added to a PMS, so that a path from the second operating system in a container to a first operating system side is established, so that the first operating system side can detect installation of the application on the second operating system in a timely manner, and the application on the second operating system can be better managed, to enhance user experience. In addition, each application on the second operating system may correspond to one proxy APK, so that when multiple applications on the second operating system are run, the first operating system may distinguish between applications on the second operating system by distinguishing between proxy APKs.

According to the method provided in this embodiment of this application, when multiple Linux applications are installed on the Android operating system, file types supported by different applications may be separately registered, and life cycles of a registration entity and Linux are synchronously managed, so that when the Linux application is installed or uninstalled, a default application and an application selector of the system can be synchronously updated, enhancing user experience.

As mentioned above, after the Linux application is uninstalled, currently, the Android operating system side cannot detect the uninstallation. As a result, after the uninstallation, there is still residual application information registered by the proxy APK. Therefore, in this embodiment of this application, when the Linux application is uninstalled, the Linux application management module may also send uninstallation information to the proxy APK after the Linux application is uninstalled, to uninstall the corresponding proxy APK. For details, still refer to FIG. 10A and FIG. 10B.

As shown in FIG. 10A and FIG. 10B, in some embodiments of this application, the method 1000 further includes the following steps.

S1007: The multi-application management module sends information #3 to the Linux application management module.

Correspondingly, the Linux application management module receives the information #3 sent by the multi-application management module, where the information #3 indicates to uninstall the Linux application #1.

S1008: The Linux application management module uninstalls the Linux application #1 based on the information #3.

S1009: The Linux application management module sends information #4 to the multi-application management module.

Correspondingly, the multi-application management module receives the information #4 sent by the Linux application, where the information #4 indicates that the Linux application #1 has been uninstalled.

It should be understood that descriptions of step S1008 to step S1010 are similar to the foregoing descriptions. For brevity, details are not described herein again.

S1010: The multi-application management module sends information #5 to the PMS.

Correspondingly, the PMS receives the information #5 sent by the multi-application management module, where the information #5 indicates that the Linux application #1 has been uninstalled.

S1011: The PMS uninstalls the proxy APK #1 based on the information #5.

After receiving the information #5, the PMS may determine the proxy APK #1 based on the information #5, and then may uninstall the proxy APK #1.

It may be understood that, in the Android operating system, a default application is registered and an application selector is managed by using an APK as a granularity, and the proxy APK #1 corresponds to the Linux application #1. After the proxy APK #1 is uninstalled, the Linux application #1 is no longer the default application or the optional application of the file type #1.

In this embodiment of this application, after the application on the second operating system is uninstalled on the second operating system running in the container, the second operating system may send information to notify that the application on the second operating system has been uninstalled. The PMS may detect that the application on the second operating system has been uninstalled, and the application on the second operating system corresponds to one proxy APK. Therefore, the PMS may uninstall the proxy APK, so that the application on the second operating system is no longer a default application or an optional application of one or more file types. In this embodiment of this application, an interface for communicating with the proxy APK and a capability of converting the application information of the application on the second operating system into the application information of the application in the first operating system are added to a PMS, so that a path from the second operating system in a container to a first operating system side is established, so that the first operating system side can detect uninstallation of the application on the second operating system in a timely manner, and the application on the second operating system can be better managed, to enhance user experience. In addition, each application on the second operating system may correspond to one proxy APK, so that when multiple applications on the second operating system are run, the first operating system may distinguish between applications on the second operating system by distinguishing between proxy APKs.

The foregoing mainly describes, from a perspective of the functional modules, the method for managing a cross-operating system application provided in embodiments of this application. It may be understood that, to implement the foregoing functions, the electronic device includes a corresponding hardware structure and/or software module for performing each of the functions. A person skilled in the art should easily be aware that, in combination with algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules (or units) of the processor in the electronic device may be obtained through division based on the foregoing method examples. For example, each functional module (or unit) may be obtained through division based on each corresponding function, or two or more functions may be integrated into one processing module (or unit). The integrated module (or unit) may be implemented in a form of hardware, or may be implemented in a form of a software functional module (or unit). It should be noted that, in embodiments of this application, division into the modules (or units) is an example and is merely logical function division, and may be other division during actual implementation.

The following describes, from a perspective of the electronic device, the method for managing a cross-operating system application provided in embodiments of this application.

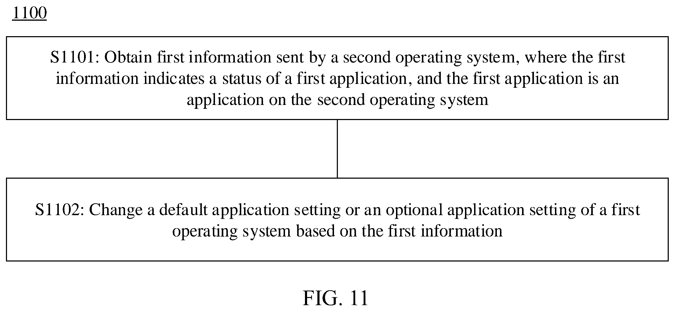

FIG. 11 is a schematic flowchart of a method 1100 for managing a cross-operating system according to an embodiment of this application. As shown in FIG. 11, the method 1100 includes the following steps.

S1101: Obtain first information sent by a second operating system, where the first information indicates a status of a first application, and the first application is an application on the second operating system.

An electronic device may obtain the first information sent by the second operating system, where the first information indicates the status of the first application, and the first application is the application on the second operating system.

In some embodiments, the status of the first application is an installed state.

In some embodiments, the status of the first application is an uninstalled state.

S1102: Change a default application setting or an optional application setting of a first operating system based on the first information.

Changing the default application setting or the optional application setting of the first operating system based on the first information may include the following several possible cases.

### First possible case:

Before the first information is obtained, the default application setting is that the first application is a default application of a first file type. The first information indicates that the first application has been uninstalled. The electronic device may change the default application setting of the first operating system based on the first information, so that the first application is no longer the default application of the first file type.

In this case, the electronic device may change the default application setting of the first operating system in the following several possible implementations.

In a possible implementation,
the first application corresponds to a first component in a proxy APK, the proxy APK acts as proxy for running all applications on the second operating system, and the changing the default application setting based on the first information includes:
disabling the first component based on the first information.

The first component includes an activity activity of an Android operating system.

**In** this embodiment of this application, the electronic device may first pre-register a first component with an application selector, and the first component corresponds to the first application. After the first application running in a container is uninstalled, the second operating system may send information to notify that the first application has been uninstalled. After determining that the first application has been uninstalled, the electronic device may disable the first component. In this embodiment of this application, a path from the second operating system in the container to a first operating system side is established, so that the first operating system side can detect uninstallation of the application on the second operating system in a timely manner, and the application on the second operating system can be better managed, to enhance user experience. In addition, in this embodiment of this application, a correspondence between an application on the second operating system and a component is established. Because each component has a different name, the first operating system can distinguish between different applications on the second operating system.

In a possible implementation,
the first application corresponds to a first proxy APK, the first proxy APK acts as proxy for running only the first application, and the changing the default application setting based on the first information includes:
uninstalling the first proxy APK based on the first information.

In this embodiment of this application, after the first application running in the container is uninstalled, the second operating system may send information to notify that the first application has been uninstalled. The first application corresponds to the first proxy APK, and the first proxy APK acts as proxy for running only the first application. Therefore, the electronic device may uninstall the first proxy APK, so that the first application is no longer the default application of the first file type. In this embodiment of this application, a path from the second operating system in the container to a first operating system side is established, so that the first operating system side can detect uninstallation of the application on the second operating system in a timely manner, and the application on the second operating system can be better managed, to enhance user experience. In addition, each application on the second operating system may correspond to one proxy APK, so that when multiple applications on the second operating system are run, the first operating system may distinguish between applications on the second operating system by distinguishing between proxy APKs.

It may be understood that, in the first possible case, after the first application is uninstalled, information or an icon of the first application is no longer displayed in a default application setting interface.

### Second possible case:

Before the first information is obtained, the optional application setting is that the first application is an optional application of a first file type. The first information indicates that the first application has been uninstalled. The electronic device may change the optional application setting of the first operating system based on the first information, so that the first application is no longer the optional application of the first file type.

In this case, the electronic device may change the optional application setting of the first operating system in the following several possible implementations.

In a possible implementation,
the first application corresponds to a first component in a proxy APK, the proxy APK acts as proxy for running all applications on the second operating system, and the changing the default application setting based on the first information includes:
disabling the first component based on the first information.

In this embodiment of this application, the electronic device may first pre-register a first component with an application selector, and the first component corresponds to the first application. After the first application running in a container is uninstalled, the second operating system may send information to notify that the first application has been uninstalled. After determining that the first application has been uninstalled, the electronic device may disable the first component. In this embodiment of this application, a path from the second operating system in the container to a first operating system side is established, so that the first operating system side can detect uninstallation of the application on the second operating system in a timely manner, and the application on the second operating system can be better managed, to enhance user experience. In addition, in this embodiment of this application, a correspondence between an application on the second operating system and a component is established. Because each component has a different name, the first operating system can distinguish between different applications on the second operating system.

In a possible implementation,
the first application corresponds to a first proxy APK, the first proxy APK acts as proxy for running only the first application, and the changing the default application setting based on the first information includes:
uninstalling the first proxy APK based on the first information.

In this embodiment of this application, after the first application running in the container is uninstalled, the second operating system may send information to notify that the first application has been uninstalled. The first application corresponds to the first proxy APK, and the first proxy APK acts as proxy for running only the first application. Therefore, the electronic device may uninstall the first proxy APK, so that the first application is no longer the optional application of the first file type. In this embodiment of this application, a path from the second operating system in the container to a first operating system side is established, so that the first operating system side can detect uninstallation of the application on the second operating system in a timely manner, and the application on the second operating system can be better managed, to enhance user experience. In addition, each application on the second operating system may correspond to one proxy APK, so that when multiple applications on the second operating system are run, the first operating system may distinguish between applications on the second operating system by distinguishing between proxy APKs.

It may be understood that, in the second possible case, after the first application is uninstalled, information or an icon of the first application is no longer displayed in an application selection interface corresponding to the first file type.

### Third possible case:

The first information indicates that the first application has been installed. The electronic device may change the default application setting or the optional application setting of the first operating system based on the first information, so that the first application is a default application or an optional application of a first file type.

In this case, the electronic device may change the default application setting or the optional application setting of the first operating system in the following several possible implementations.

In a possible implementation,
the first application is associated with the first file type through a first component in a proxy APK, the proxy APK acts as proxy for running all applications on the second operating system, before the first information is obtained, a first activity is in a disabled state, the first information indicates that the first application has been installed, and the changing the default application setting or the optional application setting based on the first information includes:
enabling the first component based on the first information.

In this embodiment of this application, the proxy APK may first pre-register at least the first component with the application selector, and the first component corresponds to the first application. After the application on the second operating system is installed on the second operating system running in the container, the second operating system may send information to notify that installation of the application on the second operating system is completed. After determining that the application on the second operating system is installed, the electronic device may enable the first component, so that the first application becomes the default application or the optional application of the first file type. In this embodiment of this application, the path from the second operating system in the container to the first operating system side is established, so that the first operating system side can detect installation of the application on the second operating system in a timely manner, and the application on the second operating system can be better managed, to enhance user experience. In addition, in this embodiment of this application, a correspondence between an application on the second operating system and a component is established. Because each component has a different name, the first operating system can distinguish between different applications on the second operating system.

In a possible implementation,
application information of the first application is obtained, the application information of the first application is converted into first application information of the first operating system, a first proxy APK is determined based on the first application information of the first operating system, where the first proxy APK acts as proxy for running only the first application, and then the first application information of the first operating system is registered with the application selector by using the first proxy APK, to change the default application setting or the optional application setting.

In this embodiment of this application, after the first application is successfully installed, the application information of the first application may be converted into the first application information of the first operating system, and the converted first application information of the first operating system is associated with the first proxy APK, that is, the first application independently corresponds to the first proxy APK. The electronic device registers the application information with the application selector by using the proxy APK, so that the application on the second operating system becomes the default application or the optional application of the first file type. In this embodiment of this application, the path from the second operating system in the container to the first operating system side is established, so that the first operating system side can detect installation of the application on the second operating system in a timely manner, and the application on the second operating system can be better managed, to enhance user experience. In addition, each application on the second operating system may correspond to one proxy APK, so that when multiple applications on the second operating system are run, the first operating system may distinguish between applications on the second operating system by distinguishing between proxy APKs.

In some embodiments, before the first information is obtained, the first application is the default application of the first file type, the first information indicates that the first application has been uninstalled, and after the changing the default application setting based on the first information, the method 1100 further includes:
setting the second application as the default application of the first file type.

Because the first application has been uninstalled, the electronic device may set the second application as the default application of the first file type. The second application may be an application in the first operating system, or may be an application on the second operating system.

It should be understood that, for a method for setting the second application as the default application of the first file type, refer to the foregoing descriptions. For brevity, details are not described herein again.

In this embodiment of this application, the first application is the default application of the first file type. After the first application is uninstalled, the electronic device may determine that the second application is the default application of the first file type. When the electronic device detects an operation of opening a file of the first file type by a user, the electronic device may open the file by using the second application, to ensure that the file is successfully opened, and the user does not need to perform an additional setting.

In some embodiments, before the first information is obtained, the first application is the default application of the first file type, the first information indicates that the first application has been uninstalled, and after the changing the default application setting based on the first information, the method 1100 further includes:
in response to an operation of opening a first file by a user, displaying a first application selection interface, where a file type of the first file is the first file type, the first application selection interface includes a first control and a second application icon, the second application icon is associated with a second application, and the first control corresponds to a default application setting function;
in response to an operation of selecting the second application icon by the user, marking the second application icon; and
in response to an operation of tapping the first control by the user, setting the second application as the default application of the first file type, and opening the first file by using the second application.

It may be understood that, in the third possible case, after the first application is installed, information or an icon of the first application may be displayed in a default application setting interface or an application selection interface corresponding to the first file type.

In this embodiment of this application, the first application is the default application of the first file type. After the first application is uninstalled, when detecting an operation of opening an application of the first file type by the user, the electronic device may display an application selection interface in response to the operation. The application selection interface may include an icon that can start the application of the first file type. The electronic device may re-determine a new default application of the first file type based on the operation of the user.

An embodiment of this application provides a computer program product. When the computer program product runs on an electronic device, the electronic device is enabled to perform the technical solutions in the foregoing embodiments. An implementation principle and technical effect of the computer program product are similar to those of the foregoing method related embodiments. Details are not described herein again.

An embodiment of this application provides a readable storage medium. The readable storage medium includes instructions. When the instructions are run on an electronic device, the electronic device is enabled to perform the technical solutions in the foregoing embodiments. An implementation principle and technical effect of the readable storage medium are similar. Details are not described herein again.

An embodiment of this application provides a chip. The chip is configured to execute instructions. When the chip runs, the technical solutions in the foregoing embodiments are performed. An implementation principle and technical effect of the chip are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, multiple units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one place, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A method for managing a cross-operating system application, wherein the method is applied to an electronic device, the electronic device is equipped with a first operating system and a second operating system, the second operating system runs based on the first operating system, the first operating system is an Android operating system or a Harmony operating system, the second operating system is different from the first operating system, and the method comprises:
obtaining first information sent by the second operating system, wherein the first information indicates a status of the first application, the first application is an application on the second operating system, and the status of the first application comprises an installed state and an uninstalled state; and
changing a default application setting or an optional application setting on the first operating system based on the first information.

2. The method according to claim 1, wherein before the obtaining the first information, the first application is a default application or an optional application of a first file type, the first information indicates that the first application has been uninstalled, and the changing the default application setting or the optional application setting on the first operating system based on the first information comprises:
changing the default application setting or the optional application setting based on the first information, so that the first application is no longer the default application or the optional application of the first file type.

3. The method according to claim 2, wherein the first application corresponds to a first component in a proxy application APK, the proxy application acts as proxy for running an application on the second operating system, and the changing the default application setting or the optional application setting based on the first information comprises:
disabling the first component based on the first information.

4. The method according to claim 2, wherein the first application corresponds to a first proxy application, the first proxy application acts as proxy for running only the first application, and the changing the default application setting or the optional application setting based on the first information comprises:
uninstalling the first proxy application based on the first information.

5. The method according to any one of claims 2 to 4, wherein before the obtaining the first information, the first application is the default application of the first file type, and after the changing the default application setting based on the first information, the method further comprises:
setting a second application as the default application of the first file type.

6. The method according to claim 2, wherein before the obtaining the first information, the first application is the default application of the first file type, and after the changing the default application setting based on the first information, the method further comprises:
in response to an operation of opening a first file by a user, displaying a first application selection interface, wherein a file type of the first file is the first file type, the first application selection interface comprises a first control and a second application icon, the second application icon is associated with a second application, and the first control corresponds to a default application setting function;
in response to an operation of selecting the second application icon by the user, marking the second application icon; and
in response to an operation of tapping the first control by the user, setting the second application as the default application of the first file type, and opening the first file by using the second application.

7. The method according to claim 1, wherein there is a correspondence between the first application and a first file type through a first component in a proxy application, before the obtaining the first information, the first component is in a disabled state, the first information indicates that the first application has been installed, and the changing the default application setting or the optional application setting on the first operating system based on the first information comprises:
enabling the first component based on the first information.

8. The method according to claim 1, wherein the changing the default application setting or the optional application setting on the first operating system based on the first information comprises:
obtaining application information of the first application;
converting the application information of the first application into first application information of the first operating system;
determining a first proxy application based on the first application information of the first operating system, wherein the first proxy application acts as proxy for running only the first application; and
registering the first application information of the first operating system with an application selector by using the first proxy application, to change the default application setting or the optional application setting.

9. The method according to claim 3 or 7, wherein the first component comprises an activity activity of the Android operating system.

10. The method according to claim 8, wherein the first application information comprises one or more of the following: a package name, an application version, icon information, an application description, and a permission.

11. The method according to any one of claims 1 to 10, wherein the first operating system is the Android operating system or the Harmony operating system, and the second operating system is a Linux operating system or a Windows operating system.

12. The method according to any one of claims 2 to 6, wherein before the obtaining the first information, the first application is the default application of the first file type, and the method further comprises:
updating a default application setting interface, so that the default application setting interface no longer comprises an icon or information of the first application.

13. The method according to any one of claims 2 to 4, wherein before the obtaining the first information, the first application is the optional application of the first file type, and the method further comprises:
updating the optional application setting; and
in response to an operation of opening a first file by a user, displaying an application selection interface, wherein a file type of the first file is the first file type, and the application selection interface no longer comprises an icon or information of the first application.

14. The method according to claim 7 or 8, wherein the method further comprises:
updating a default application setting interface, so that the default application setting interface comprises information or an icon of the first application.

15. The method according to claim 7 or 8, wherein the method further comprises:
updating the optional application setting; and
in response to an operation of opening a first file by a user, displaying an application selection interface, wherein a file type of the first file is the first file type, and an icon or information of the first application is added to the application selection interface.

16. The method according to claim 3, wherein the first operating system comprises a multi-application management module, a multi-component management module, an application selector, and a package manager service PMS, the second operating system comprises an application management module, and the obtaining the first information sent by the second operating system comprises: obtaining, by the multi-application management module, the first information from the application management module; and
the changing the default application setting or the optional application setting on the first operating system based on the first information comprises:
determining, by the multi-application management module based on the first information, that the first application has been uninstalled;
communicating, by the application management module, with the multi-component management module, so that the multi-component management module determines that the first component is in the disabled state;
receiving, by the package manager service through a customization interface, second information sent by the multi-component management module, wherein the second information indicates that the first component is in the disabled state; and
disabling, by the package manager service, the first component based on the second information, so that the application selector updates the default application setting or the optional application setting.

17. The method according to claim 4, wherein the first operating system comprises a multi-application management module, an application selector, and a package manager service PMS, the second operating system comprises an application management module, and the obtaining the first information sent by the second operating system comprises:
obtaining, by the multi-application management module, the first information from the application management module; and
the changing the default application setting or the optional application setting on the first operating system based on the first information comprises:
receiving, by the package manager service through a customization interface, second information sent by the multi-component management module, wherein the second information indicates to uninstall the first proxy application; and
uninstalling, by the package manager service, the first proxy application based on the second information, so that the application selector updates the default application setting or the optional application setting.

18. The method according to claim 7, wherein the first operating system comprises a multi-application management module, a multi-component management module, an application selector, and a package manager service PMS, the second operating system comprises an application management module, and the obtaining the first information sent by the second operating system comprises:
obtaining, by the multi-application management module, the first information from the application management module; and
the changing the default application setting or the optional application setting on the first operating system based on the first information comprises:
communicating, by the application management module, with the multi-component management module, so that the multi-component management module determines that the first component is in the enabled state;
receiving, by the package manager service through a customization interface, second information sent by the multi-component management module, wherein the second information indicates that the first component is in the enabled state; and
enabling, by the package manager service, the first component based on the second information, so that the application selector updates the default application setting or the optional application setting.

19. The method according to claim 8, wherein the first operating system comprises a multi-application management module, an application selector, and a package manager service PMS, the second operating system comprises an application management module, and the obtaining the first information sent by the second operating system comprises:
obtaining, by the multi-application management module, the first information from the application management module; and
the changing the default application setting or the optional application setting on the first operating system based on the first information comprises:
obtaining, by the multi-application management module, the application information of the first application;
converting, by the multi-application management module, the application information of the first application into application information of the first proxy application; and
registering, by the first proxy application, the application information of the first proxy application with the application selector, so that the application selector updates the default information setting or the optional application setting.

20. An electronic device, comprising one or more processors and one or more memories, wherein the one or more memories store one or more computer programs, the one or more computer programs comprise instructions, and when the instructions are executed by the one or more processors, the method according to any one of claims 1 to 19 is performed.

21. A chip, wherein the chip comprises a processor and a communication interface, the communication interface is configured to receive a signal and transmit the signal to the processor, and the processor processes the signal, so that the method according to any one of claims 1 to 19 is performed.

22. A computer-readable storage medium, wherein the computer-readable storage medium stores computer instructions, and when the computer instructions are run on a computer, the method according to any one of claims 1 to 19 is performed.

23. A computer program product, wherein when the computer program product runs on an electronic device, the electronic device is enabled to perform the method according to any one of claims 1 to 19.
